# FASCICULE DE BREVET EUROPEEN

(11) **EP 2 010 389 B1**
(45) Date de publication et mention de la délivrance du brevet: **08.06.2011**
(21) Numéro de dépôt: 07735442.1
(22) Date de dépôt: 10.04.2007
(51) Int. Cl.: B41C 1/05

(54) **PROCÉDÉ DE GÉNÉRATION DE MOTIFS REPRÉSENTANT UNE IMAGE EN DEMI-TEINTES**
VERFAHREN ZUR ERZEUGUNG VON EIN RASTERBILD DARSTELLENDEN MUSTERN
METHOD OF GENERATING PATTERNS REPRESENTING A HALFTONE IMAGE

(30) Priorité: 13.04.2006 EP 06112663
(43) Date de publication de la demande: 07.01.2009
(73) Titulaire: KBA-NotaSys SA, 1000 Lausanne 22 (CH)
(72) Inventeur: MANFREDI, Renato, CH-1832 Chamby (CH); FORESTI, Jean-François, CH-1024 Ecublens (CH)
(74) Mandataire: Grosfillier, Philippe
(86) Numéro de dépôt international: PCT/IB2007/051275
(87) Numéro de publication internationale: WO 2007/119203

(56) Documents cités:
- WO-A-02/20268
- WO-A-03/052702
- US-A- 5 062 359

## Description

### DOMAINE TECHNIQUE

La présente invention concerne un procédé de génération de motifs représentant une image en demi-teintes, ce procédé comprenant la génération d'un premier ensemble de motifs constitués de lignes et de courbes modulées en dimensions pour produire des variations de tons restituant les demi-teintes de l'image selon une technique de rendu taille-douce. La présente invention concerne également un procédé de production d'une plaque d'impression taille-douce comprenant la transposition par gravure des motifs ainsi générés, ainsi qu'une plaque gravée pour la production de plaques d'impression taille-douce.

### ARRIÈRE-PLAN TECHNOLOGIQUE

La taille-douce est une technique d'impression séculaire remontant au 15^{e} siècle qui consiste à imprimer des motifs au moyen d'une plaque, d'impression gravée (ou plaque d'impression taille-douce) qui est encrée sur sa surface, puis essuyée avant impression afin de confiner l'encre ou les encres déposées à l'intérieur des gravures de la plaque. La plaque d'impression ainsi encrée est appliquée contre le papier à imprimer dans une presse exerçant une pression suffisante du papier contre la plaque d'impression afin que l'encre des gravures soit transférée sur le papier. Le résultat est un document comportant un motif imprimé reflétant les motifs gravés avec un relief ou embossage additionnel, en registre avec le motif imprimé, qui reflète la profondeur des gravures et qui est reconnaissable au toucher.

Pendant longtemps, les plaques d'impression taille-douce étaient communément gravées à la main dans une plaque en métal doux, par exemple en cuivre, en laiton ou tout autre métal ou alliage de métaux adéquat. Les outils utilisés par le graveur sont typiquement constitués de burins ou poinçons dont l'extrémité est affûtée et adaptée aux dimensions souhaitées des motifs à graver, ces derniers motifs étant essentiellement constitués de lignes et de courbes modulées en dimensions en fonction de l'action exercée par le graveur pour produire des variations de tons restituant les demi-teintes de l'image à graver (par exemple un portrait).

Plus récemment des techniques photo-lithographiques ont été proposées pour faciliter le transfert d'images sur les plaques d'impression, ainsi que des procédés de gravure assistés par ordinateur.

La technique d'impression taille-douce est notamment utilisée dans le domaine de l'impression de sécurité, en particulier pour l'impression de billets de banque, l'impression taille-douce restant l'une des techniques les plus difficiles à contrefaire sans équipement adéquat.

Dans le cadre de l'impression de sécurité, en particulier l'impression de billets de banque, des techniques ont été développées pour assister le graveur dans sa tâche, notamment en vue de réduire le temps de gravure nécessaire ainsi que le temps de production des plaques d'impression. L'approche adoptée jusqu'à encore très récemment consistait à produire un unique original gravé (à la main ou assisté par des moyens techniques de gravure) représentant un seul document à imprimer, et à répliquer cet original autant de fois que nécessaire pour produire une plaque d'impression comportant plusieurs répliques identiques dudit original. Selon cette approche, la technique de gravure employée suit celle d'un graveur, c'est-à-dire que chaque motif est gravé selon le tracé de la ligne ou courbe à effectuer, c'est-à-dire de manière vectorielle (voir par exemple la demande internationale WO 97/48555).

Le présent déposant a proposé une nouvelle approche pour la production de plaques d'impression taille-douce, approche qui est décrite dans la demande internationale WO 03/103962. Cette méthode consiste à générer un ensemble de données digitales tridimensionnelles constituées de pixels représentatifs chacun d'un point élémentaire à graver dans la surface de la plaque à graver, la gravure étant opérée pixel par pixel sur la base desdites données digitales tridimensionnelles. Selon cette technique, une plaque d'impression peut être directement gravée. Alternativement, un précurseur de plaque d'impression (avantageusement une plaque métallique portant une couche de polymère) peut être gravé. Dans ce dernier cas, c'est la couche de polymère qui est gravée et le précurseur ainsi formé est ensuite utilisé pour fabriquer des plaques d'impression par galvanoplastie. La gravure est par ailleurs avantageusement effectuée par laser.

Contrairement à l'approche précédente, une plaque dans son ensemble peut être gravée en une seule phase, sans passer par le processus fastidieux de réplication d'un original. Selon la technique décrite dans la demande internationale WO 03/103962, la réplication de l'original sur la plaque est effectuée de manière numérique, ceci permettant en particulier de compenser les distorsions du papier lors de l'impression taille-douce, compensation qui était tout simplement impossible en utilisant les techniques employées précédemment.

Un avantage considérable de la technique susmentionnée réside dans le fait qu'elle est essentiellement indépendante de la complexité des motifs à graver, alors que les techniques antérieures sont tributaires du niveau de complexité des motifs à graver.

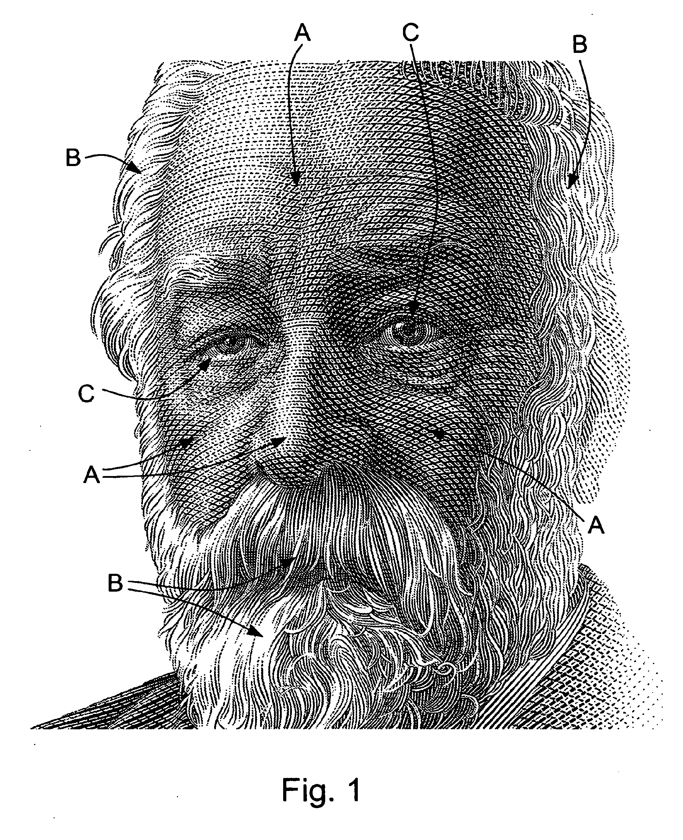

La figure 1 montre une image en demi-teintes représentative de l'état de la technique qui illustre un portrait de Jules Verne et qui est formée d'un ensemble de motifs constitués de lignes et de courbes modulées en dimensions pour produire les variations de tons restituant les demi-teintes de l'image. Les motifs illustrés sont réalisés selon une technique de rendu taille-douce conventionnelle. Comme l'on peut le voir sur la figure 1, différentes parties du portrait sont restituées au moyen de diverses combinaisons de lignes et de courbes. Ainsi, les parties A du portrait représentant la peau au niveau du front, des joues, du nez, sont typiquement représentées au moyen d'un ensemble de lignes et courbes croisées, avec l'adjonction éventuelle d'un point ou d'un segment de ligne (communément dénommés « interlignes » ou « inner dots ») à l'intérieur des espaces en forme de losanges laissés entre les lignes et courbes croisées. Par contre, les cheveux et poils B sont représentés par un ensemble de lignes et courbes essentiellement parallèles. Enfin, les yeux C sont représentés par un ensemble de segments de cercles concentriques. Toutes ces représentations, ainsi que d'autres, sont ainsi combinées pour restituer diverses parties caractéristiques de l'image en demi-teintes à représenter.

S'agissant de la technique de rendu taille-douce conventionnelle illustrée dans la figure 1, il convient de faire une différence entre cette technique de rendu et les techniques de rendu par héliogravure (ou rotogravure) qui utilisent des trames régulières dont le point de trame est modulé en dimensions pour restituer les demi-teintes de l'image. Bien que ces techniques permettent la restitution d'images en demi-teintes, elles présentent le désavantage de supprimer toute expressivité dans la manière avec laquelle l'image est restituée, rendant celle-ci synthétique et sans vie, et dégradent d'autant le niveau de sécurité de telles représentations qui peuvent être reproduites relativement aisément. De plus, l'héliogravure emploie des encres comparativement plus fluides que les encres taille-douce et le procédé d'impression lui-même ne génère aucun relief sur le document imprimé. Des procédés de génération de motifs pour l'héliogravure sont par exemple décrits dans le document WO 83/00570. Un équipement pour la transposition par gravure mécanique de tels motifs est par exemple décrit dans la publication US 5,675,420.

Du point de vue de la sécurité, l'impression taille-douce présente déjà à elle-seule une haute résistance à la contrefaçon en raison de ses particularités propres (relief, tactilité, épaisseur d'encre imprimée, etc.) qui sont difficilement reproductibles avec des moyens conventionnels.

Un moyen d'accroître le niveau de sécurité des impressions taille-douce consiste par exemple à intégrer des micro-structures non reconnaissables à l'oeil nu dans l'impression elle-même. Une solution consiste notamment à structurer l'une des lignes ou courbes dans l'image sous la forme d'un micro-texte en positif ou en négatif. L'intégration d'un tel micro-texte dans un portrait est par exemple exploitée dans le billet de 100 dollars américains où une ligne du col du portrait du président Benjamin Franklin est structurée pour transcrire l'expression « UNITED STATES OF AMERICA ». Une proposition allant dans ce sens figure également dans la demande internationale WO 02/20268.

Toutefois, dans cette demande internationale WO 02/20268, il est uniquement question de superposer, en positif ou en négatif, des structures fines (par exemple des micro-lettres ou des symboles géométriques) sur une ou plusieurs lignes ou courbes d'une image en demi-teintes qui est restituée selon une technique de rendu taille-douce classique. Il en résulte des lignes structurées en positif ou en négatif, à l'image de ce qui est pratiqué sur le billet de 100 dollars américains susmentionné. Cette solution ne modifie globalement pas le rendu de l'image en demi-teintes, lequel rendu est uniquement assuré par un ensemble de motifs constitués de lignes et de courbes, le cas échéant structurées comme indiqué ci-dessus, qui sont modulées en dimensions.

D'autres solutions pour accroître la sécurité des impression taille-douce ont été proposées. Le brevet US 5,018,767 propose par exemple de superposer à l'image une grille formée de lignes parallèles dont l'espacement est choisi pour interférer avec le fonctionnement de scanners et photocopieurs.

D'autres solutions consistent à intégrer des images latentes dans l'impression taille-douce, c'est-à-dire des images qui se révèlent uniquement sous certaines conditions d'observation. De telles solutions sont notamment proposées dans les publications US 4,033,059 et US 4,588,212. Ces solutions sont toutefois difficilement intégrables en tant que telles dans des images en demi-teintes sans affecter l'aspect visuel de ces dernières.

Il existe donc encore un besoin d'accroître le niveau de sécurité des impressions taille-douce représentant des images en demi-teintes.

### EXPOSÉ DE L'INVENTION

Un but de la présente invention est d'améliorer les techniques de l'art antérieur.

Un but général de la présente invention est donc de proposer un procédé de génération de motifs représentant une image en demi-teintes pour la production de plaques d'impression taille-douce qui permette d'atteindre un niveau de sécurité accru permettant de lutter plus efficacement contre la contrefaçon.

Un autre but de la présente invention est de proposer un tel procédé qui n'affecte en soi pas l'aspect visuel général de l'image restituée et qui, au contraire, permet d'améliorer le rendu de l'image.

La présente invention répond à ces buts en proposant un procédé dont les caractéristiques sont énoncées dans la revendication indépendante 1. Selon l'invention, le procédé comprend ainsi la génération de deux ensembles de motifs distincts restituant chacun les demi-teintes de l'image et qui sont entrelacés l'un dans l'autre. Le premier ensemble de motifs est constitué de lignes et de courbes modulées en dimensions pour produire des variations de tons restituant les demi-teintes de l'image selon une technique de rendu taille-douce conventionnelle. Le second ensemble comprend des microstructures distinctes des lignes et des courbes constitutives du premier ensembles de motifs, qui sont modulées en dimensions pour produire des variations de tons restituant les demi-teintes de l'image. Selon l'invention, les microstructures sont constituées de microstructures stochastiques assimilables à un grain et/ou de microstructures répétitives restituant une information reconnaissable par un observateur, lesquelles microstructures répétitives comprennent des micro-lettres et/ou des micro-symboles. L'entrelacement des deux ensembles est effectué de telle sorte que les microstructures constitutives du second ensemble de motifs occupent les espaces entre les lignes et courbes constitutives du premier ensemble de motifs et de manière à ce que les demi-teintes restituées par le second ensemble de motifs complètent les demi-teintes restituées par le premier ensemble de motifs.

Les microstructures stochastiques sont assimilables à un grain, c'est-à-dire des microstructures distribuées aléatoirement dans le plan image (par exemple un grain formé de points distribués de manière aléatoire), lesquelles microstructures stochastiques présenteront préférablement des dimensions inférieures à 10 microns. Dans ce contexte, il convient de noter que ces microstructures stochastiques pourront être clairement différenciées d'un grain conventionne appliqué de manière uniforme sur l'ensemble de l'image.

Les microstructures répétitives formées de micro-lettres et/ou micro-symboles restituent une information reconnaissable par un observateur (à l'aide de moyen grossissants adéquats). Dans ce contexte, il apparaît avantageux que des première et seconde microstructures répétitives (par exemple deux lettres), ou plusieurs microstructures, soient modulées en dimensions de manière différenciée. Dans le cadre de l'invention, il apparaît préférable que la largeur de ligne desdites microstructures répétitives n'excède pas quelques dizaines de microns.

Il résulte de la mise en oeuvre du procédé susmentionné une image dont le rendu et la plastique sont améliorés, permettant la mise en évidence de tons et nuances qu'il n'est pas possible de créer en utilisant la technique de rendu taille-douce conventionnelle seule. Ce résultat se distingue notablement de ce qui est classiquement réalisé dans le domaine.

Par exemple, le résultat de la mise en oeuvre de la présente invention se distingue notablement de la solution décrite dans la demande internationale WO 02/20268 susmentionnée en ce que le second ensemble de motifs générés selon l'invention (à savoir les microstructures stochastiques assimilables à un grain ou les microstructures répétitives formées de micro-lettres et/ou de micro-symboles) est, d'une part, modulé en dimensions afin de produire des variations de tons restituant les demi-teintes de l'image et est, d'autre part, entrelacé avec le premier ensemble de motifs (à savoir les lignes et courbes classiques du rendu taille-douce) de telle sorte que les microstructures du second ensemble de motifs occupent les espaces entre les lignes et courbes du premier ensemble de motifs et de manière à ce que les demi-teintes restituées par le second ensemble de motifs complètent les demi-teintes restituées par le premier ensemble de motifs.

De plus, le niveau de sécurité de l'impression taille-douce résultante est accru dans la mesure où l'intégration et l'entrelacement du second ensemble de motifs dans l'espace interligne entre les lignes et courbes du premier ensemble de motifs ne peuvent être reproduits qu'avec des outils d'une grande précision qui ne sont pas directement accessibles aux contrefacteurs. De plus une réplication au moyen d'une gravure effectuée à la main ou par un procédé de gravure vectorielle semi-automatisé est trop fastidieuse pour pouvoir être envisagée, sachant que le second ensemble de motifs comprend une myriade de microstructures dont les dimensions sont par ailleurs modulées en fonction des demi-teintes de l'image. Il ne suffit en particulier pas de rajouter un grain conventionnel sur l'ensemble de la gravure pour obtenir une réplique similaire ou correspondant à la plaque originelle ou de superposer des structures fines en positif ou en négatif comme suggéré dans la demande internationale WO 02/20268.

Selon une variante de l'invention, les microstructures du second ensemble sont choisies et modulées en dimension de telle sorte que le ton restitué par ces microstructures, pour une zone déterminée de l'image, soit plus clair que le ton restitué par les lignes et courbes constitutives du premier ensemble de motif. De cette manière, l'expressivité propre aux portraits (ou autres images) réalisés selon les techniques de rendu taille-douce conventionnelles est maintenue, tout en améliorant la dynamique et les tonalités de l'image grâce aux microstructures modulées du second ensemble.

Selon encore une autre variante de l'invention, les motifs générés sont des motifs tridimensionnels qui sont modulés en dimensions en largeur (dans le plan de l'image) et/ou en profondeur (perpendiculairement au plan de l'image). En particulier, il est avantageusement prévu de moduler en dimensions les lignes et courbes constitutives du premier ensemble et les microstructures constitutives du second ensemble de manières différentes. Une telle approche permet de différencier non seulement les motifs par leur forme, mais également par la manière selon laquelle ils sont modulés. Par exemple, les lignes et courbes du premier ensemble peuvent être modulées en largeur et en profondeur alors que les microstructures du second ensemble peuvent être modulées uniquement en largeur ou en profondeur. Cette différenciation sera avantageuse pour lutter encore plus efficacement contre la contrefaçon.

Dans le même but, un profil de gravure déterminé peut être attribué à chaque ensemble de motifs de manière à offrir une possibilité supplémentaire de différenciation entre les deux ensembles de motifs.

La présente invention trouve une application particulièrement avantageuse dans le cadre de la réalisation de portraits, de vignettes ou autres motifs picturaux.

D'autres aspects de l'invention font l'objet des revendications dépendantes, en particulier un procédé de production d'une plaque d'impression taille-douce avec les motifs susmentionnés, une plaque gravée, notamment pour la production de plaques d'impression taille-douce, ainsi qu'un document de valeur, notamment un billet de banque.

### DESCRIPTION SOMMAIRE DES DESSINS

Les caractéristiques et avantages de la présente invention apparaîtront plus clairement à la lecture de la description détaillée qui suit de modes de réalisation de l'invention, présentés uniquement à titre d'exemples non limitatifs et illustrés par les dessins annexés où:
- la figure 1 montre une image en demi-teintes représentative de l'état de la technique illustrant un portrait de Jules Verne selon une technique de rendu taille-douce conventionnelle;
- la figure 2 montre un spécimen de billet de banque incorporant le portrait de la figure 1 sous la forme d'une impression taille-douce ;
- la figure 3 montre une image en demi-teintes illustrant le portrait de Jules Verne généré selon un premier mode de réalisation de l'invention ;
- la figure 4 montre une vue agrandie d'un détail du portrait de la figure 3, à savoir une zone de la partie droite de la joue ;
- la figure 5 montre une vue agrandie d'un autre détail du portrait de la figure 3, à savoir la zone de l'oeil sur la partie gauche du portrait;
- la figure 6 montre une image en demi-teintes illustrant le portrait de Jules Verne généré selon un second mode de réalisation de l'invention;
- la figure 7 montre une vue agrandie d'un premier détail du portrait de la figure 6, à savoir la zone de l'oeil sur la partie droite du portrait;
- la figure 8 montre une vue agrandie d'un second détail du portrait de la figure 6, à savoir une zone de la partie droite de la joue ; et
- la figure 9 montre une vue agrandie d'un troisième détail du portrait de la figure 6, à savoir la zone de l'oeil sur la partie gauche du portrait;

### MODES DE RÉALISATION DE L'INVENTION

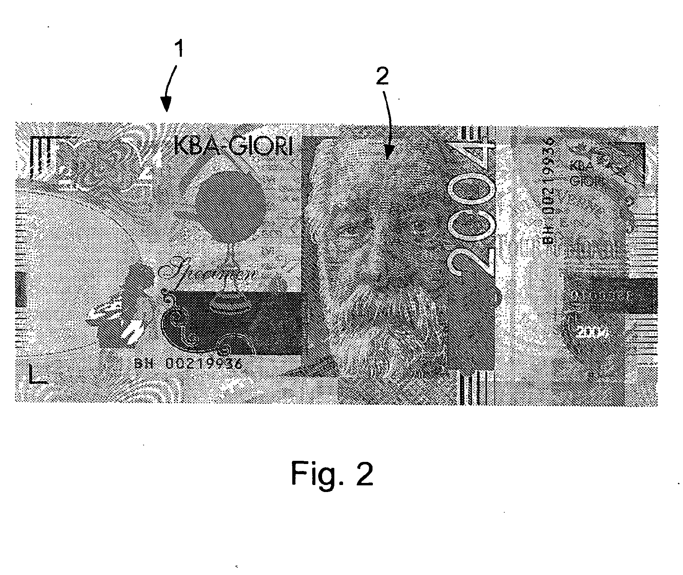

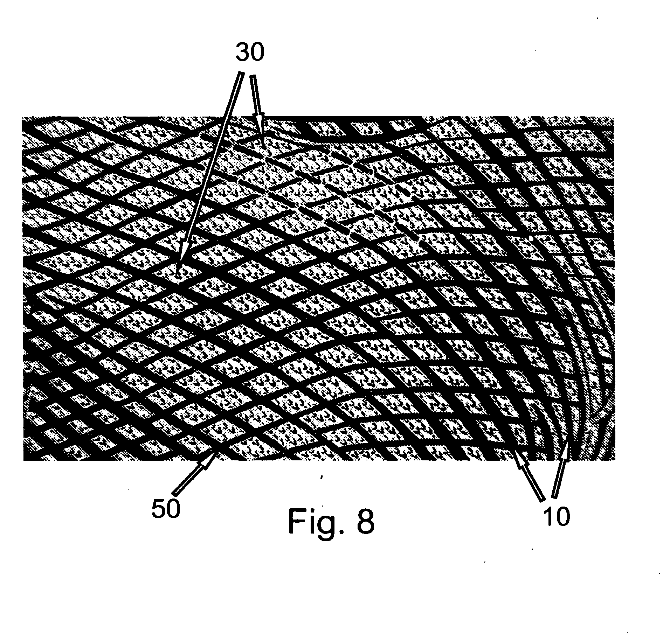

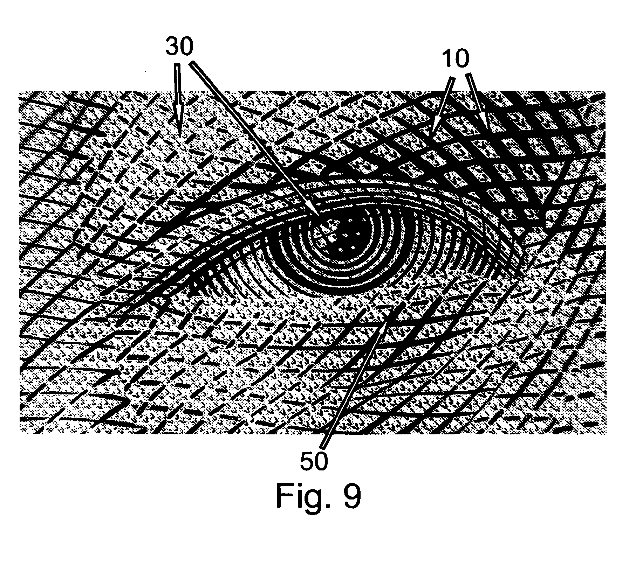

Dans la suite de la présente description, il sera fait référence aux figures 1 et 3 à 9 qui montrent des portraits de Jules Verne selon diverses techniques de rendu, ainsi que des détails agrandis de ces portraits. Pour les besoins de l'explication, les portraits illustrés dans ces figures ont été agrandis, y compris les illustrations des figures 1, 3 et 6. Il faut toutefois comprendre et réaliser que les portraits illustrés présentent en réalité une taille de l'ordre de moins d'une dizaine de centimètres de haut afin de pouvoir être incorporés dans le dessin d'un billet de banque. Sur ce point, la figure 2 montre une vue d'ensemble d'un spécimen d'un tel billet de banque 1 incorporant le portrait de la figure 1 sous la forme d'une impression taille-douce 2. D'autres motifs sont imprimés en taille-douce sur le spécimen, par exemple l'indication de l'année « 2004 » et les motifs géométriques sur la droite du portrait et les indications « KBA-GIORI » et « Spécimen » sur la gauche du portrait. Dans la réalisation illustrée dans la figure 2, le portrait 2 présente ainsi une taille de l'ordre de 6 cm de haut.

Il est entendu que le motif imprimé 2 de la Figure 2 peut avantageusement être réalisé selon l'invention qui va maintenant être décrite.

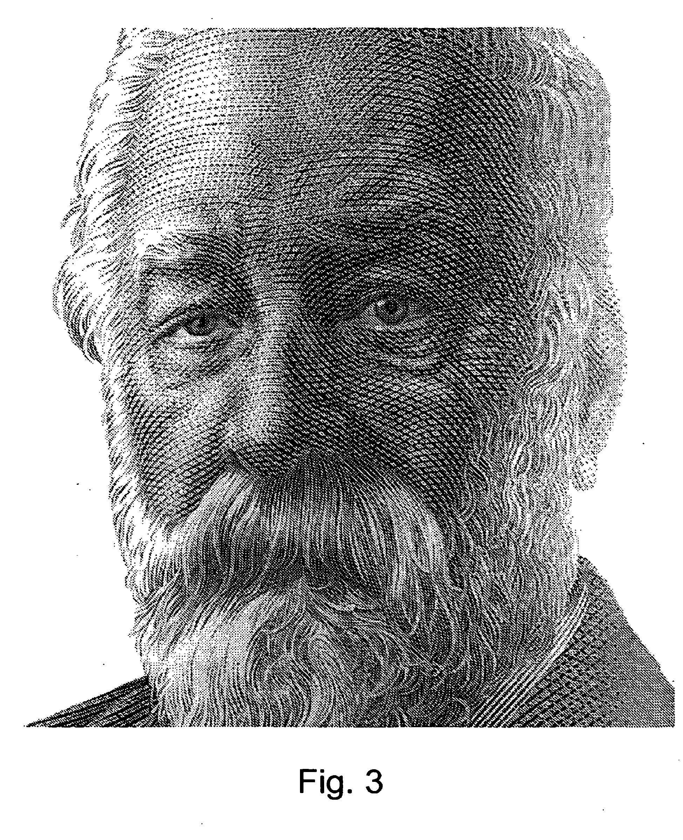

La figure 3 montre une image en demi-teintes illustrant le portrait de Jules Verne généré selon un premier mode de réalisation de l'invention. L'image d'origine sur la base de laquelle le portrait est généré est identique à celle utilisée pour la génération du portrait conventionnel de la figure 1. La plastique et le rendu de l'image sont toutefois différents. En particulier, un examen attentif de la figure 3 fait ressortir une plus grande finesse de détail, en particulier au niveau des zones à forte variation de tons, notamment au niveau des yeux. Une telle finesse de rendu n'est pas présente dans le portrait de la figure 1 qui est uniquement composé d'un ensemble de motifs constitués de lignes et courbes modulées en dimensions selon la technique de rendu taille-douce conventionnelle. Dans le portrait de la figure 1 on peut en particulier discerner les lignes et courbes constitutives du portrait, alors que dans la figure 3, ces mêmes lignes et courbes, présentes à l'identique, apparaissent mieux intégrées. On peut parler d'une manière générale d'amélioration de la « plastique » de l'image rendant, dans le cas d'espèce, le portrait plus expressif avec un effet de demi-teintes plus fidèle.

Cette finesse accrue dans le mode de réalisation de la figure 3 est le résultat de l'entrelacement d'un second ensemble de motifs constitués de microstructures distinctes des lignes et des courbes constitutives du premier ensemble de motifs, lesdites microstructures étant modulées en dimensions pour produire des variations de tons restituant les demi-teintes de l'image. Plus précisément, l'entrelacement des deux ensembles de motifs est effectué, selon l'invention, de telle sorte que les microstructures constitutives du second ensemble de motifs occupent les espaces entre les lignes et courbes constitutives du premier ensemble de motifs et de manière à ce que les demi-teintes restituées par le second ensemble de motifs complètent les demi-teintes restituées par le premier ensemble de motifs. En d'autres termes, les demi-teintes du portrait de la figure 3 sont restituées par deux ensembles de motifs distincts et complémentaires.

Plus précisément, selon le premier mode de réalisation illustré dans la figure 3, les microstructures sont constituées de microstructures stochastiques, c'est-à-dire des microstructures distribuées essentiellement aléatoirement de manière à former un fond. Ces microstructures stochastiques peuvent être des points ou des dessins plus complexes. Ces microstructures stochastiques peuvent être assimilées à un grain. Il convient toutefois de différencier ces microstructures stochastiques d'un grain sensiblement uniforme superposé aux lignes et courbes formant le dessin principal. En effet, selon l'invention, les microstructures stochastiques sont modulées en dimensions afin de former un grain restituant les demi-teintes de l'image. Une telle modulation n'est pas présente dans les grains éventuellement ajoutés sur les gravures conventionnelles.

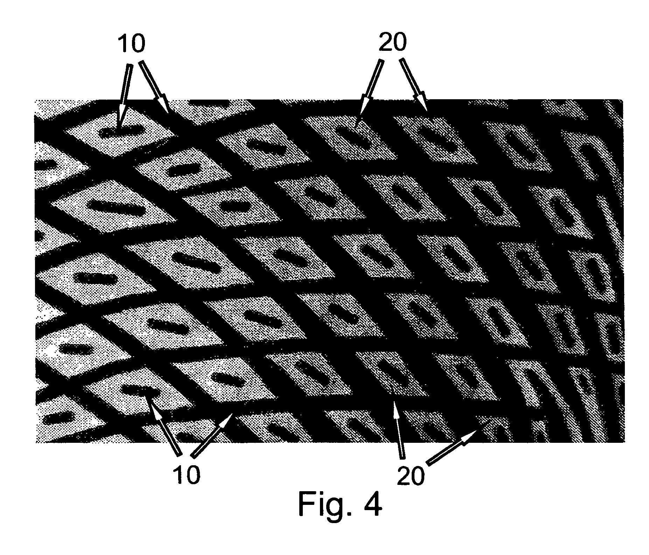

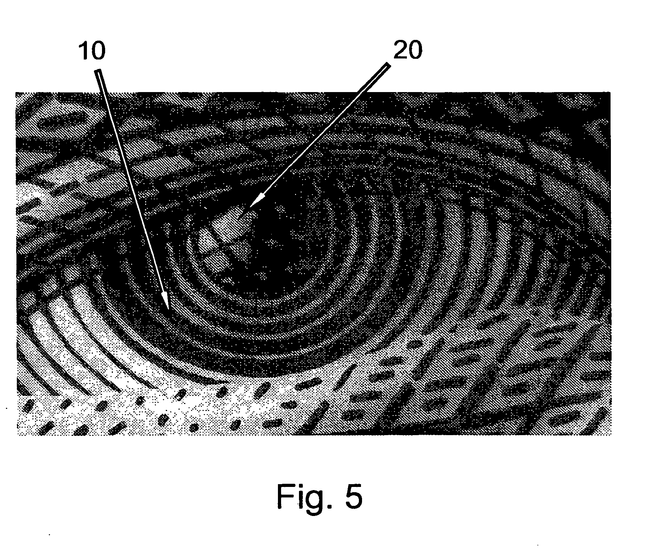

Les figures 4 et 5 montrent des détails agrandis du portrait de la figure 3, à savoir respectivement une zone de la joue droite du portrait, en-dessous de l'oeil droit, et la zone de l'oeil sur la partie gauche. Comme on peut mieux le voir sur ces figures, les lignes et courbes 10 constitutives du premier ensemble de motifs (les motifs « traditionnels » d'une représentation taille-douce) forment des espaces dans lesquels sont disposés les microstructures stochastiques 20. La modulation en dimensions desdites microstructures stochastiques 20 est particulièrement apparente dans la figure 5 qui montre le détail de l'oeil gauche où les variations de tons sont particulièrement prononcées.

Les microstructures stochastiques 20 ont préférablement des dimensions inférieures à 10 microns rendant leur détection et leur résolution très difficile, voire impossible, par des moyens d'acquisition photographique classiques, tels des photocopieurs ou scanneurs.

De préférence, comme illustré dans les figures 3 à 5, pour une zone donnée de l'image, le ton restitué par les lignes et courbes 10 est plus foncé que le ton restitué par les microstructures 20. Ceci permet d'assurer une prédominance des lignes et courbes 10 en matière de restitution des tons et du contraste de l'image et de mieux « fondre » les microstructures 20 dans l'ensemble de l'image. De plus, cette différenciation a pour effet de « masquer » les microstructures entrelacées lors d'une copie de l'image par des moyens d'acquisition photographique classiques, tels des photocopieurs ou scanneurs. En effet, lors d'une telle copie, l'intensité comparativement plus élevées des lignes et courbes 10 aura pour effet de saturer les moyens d'acquisition au voisinage direct desdites lignes et courbes 10, rendant la détection des microstructures 20 très difficile.

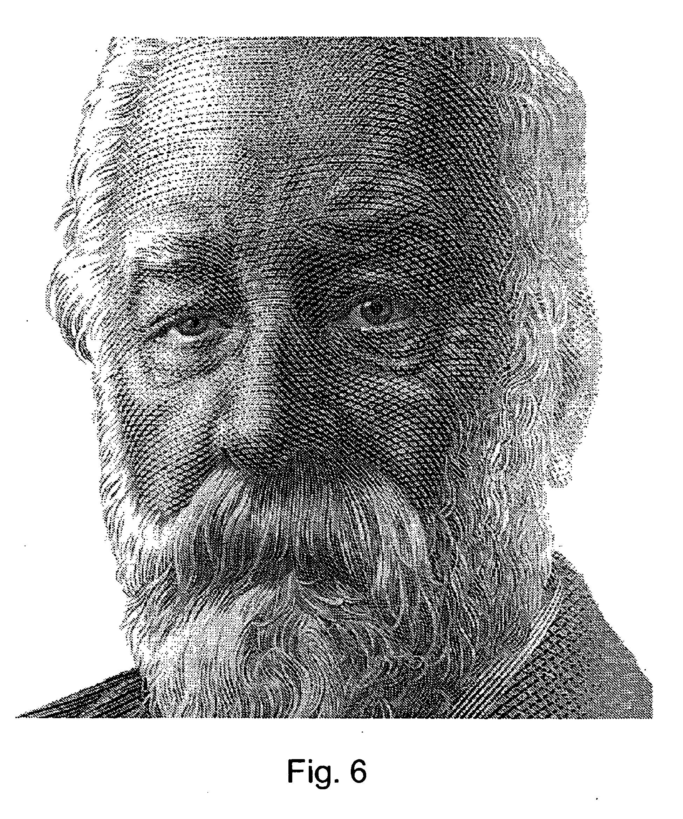

La figure 6 montre une image en demi-teintes illustrant le portrait de Jules Verne généré selon un second mode de réalisation de l'invention. L'image d'origine sur la base de laquelle le portrait est généré est à nouveau identique à celle utilisée pour la génération du portrait conventionnel de la figure 1 et du portrait selon le premier mode de réalisation de la figure 3. La plastique et le rendu de l'image sont analogues à ceux de l'image restituée selon le premier mode de réalisation de la figure 2. Un examen attentif de la figure 6 fait à nouveau ressortir une plus grande finesse de détail par rapport au portrait classique de la figure 1.

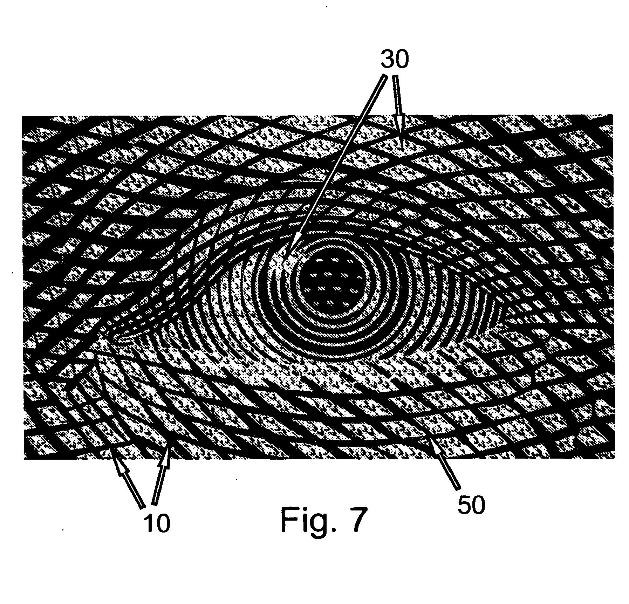

A la différence du premier mode de réalisation, le second mode de réalisation de la figure 6 intègre un second ensemble de motifs constitués de microstructures répétitives (désignées par la référence numérique 30 dans les figures 7 à 9) restituant une information reconnaissable par un observateur. Plus précisément, comme illustré dans les détails des figures 7 à 9, lesdites microstructures répétitives sont des micro-lettres restituant l'information « J V ». Il pourrait alternativement s'agir de chiffres ou de tout autre micro-symbole pictural (étoile, formes géométriques plus ou moins complexes, etc.).

De préférence, les microstructures 30 présentent une largeur de ligne qui n'excède pas quelques dizaines de microns. Par « largeur de ligne », il faut comprendre l'épaisseur du tracé des microstructures, et non pas la taille des microstructures. Dans les figures 7 à 9, la largeur de ligne est ainsi de l'ordre de 10 à 50 microns (en fonction de la modulation) et la taille de caractères de l'ordre d'une centaine de microns.

Selon ce second mode de réalisation, il convient à nouveau de différencier les microstructures 30 illustrées des micro-textes qu'il est classiquement possible d'intégrer dans un motif pictural taille-douce. Selon l'état de la technique, ces micro-textes font partie intégrantes des lignes et courbes du dessins principal, c'est-à-dire que les micro-textes sont structurés pour former une ligne ou une courbe (comme dans le cas du billet de 100 dollars américain). Par contre, selon la présente invention, les micro-lettres ou micro-symboles ne sont pas en tant que tels structurés pour former des lignes ou des courbes, mais sont interposés dans les espaces entre les lignes et les courbes du dessin principal. De plus, ces microstructures répétitives sont modulées en dimensions pour restituer les demi-teintes de l'image en complément des demi-teintes restituées par les lignes et courbe du dessin principal. Les microstructures répétitives selon l'invention participent donc au rendu des demi-teintes de l'image et non pas uniquement à une fonction consistant à cacher une information intelligible dans le dessin.

Préférablement, comme illustré dans les figures 6 à 9, les microstructures 30 sont entrelacées entre les lignes et les courbes 10 de manière à ne présenter aucune partie contiguë et laisser un faible espace 50 entre les microstructures 30 et les lignes et courbes 10. Cet espace 50 peut être défini avec précision pour avoir des dimensions de l'ordre de quelques microns. Du fait de ses très faibles dimensions, cet espace 50 ne pourra que difficilement, voire pas du tout, être détecté par des moyens d'acquisition photographique conventionnels. Un tel espacement pourrait aussi être prévu dans le cadre du premier mode de réalisation décrit précédemment.

A-l'image de ce qui a déjà été mentionné au sujet du premier mode de réalisation, il est préférable de moduler en dimensions les microstructures répétitives 30 de telle sorte que, pour une zone donnée de l'image, le ton restitué par les lignes et courbes 10 soit plus foncé que le ton restitué par les microstructures 30. Ceci permet à nouveau d'assurer une prédominance des lignes et courbes 10 en matière de restitution des tons et du contraste de l'image et de mieux « fondre » les microstructures 30 dans l'ensemble de l'image de manière à rendre ces dernières moins facilement détectables par des moyens d'acquisition conventionnels.

Dans les illustrations des figures 7 à 9, on pourra relever que les « interlignes » (ou « inner dots ») présents dans la représentation traditionnelle dans les espaces en forme de losange entre les ensembles de lignes et courbes croisées représentant la peau (zones A dans la figure 1) ont été supprimés dans le second mode de réalisation. Ceci permet avantageusement de ménager plus de place pour les microstructures répétitives afin qu'elles puisse mieux être identifiées. Une variante du second mode de réalisation incorporant les « interlignes » est cependant parfaitement envisageable dans le cadre de la présente invention.

S'agissant de la modulation en dimensions des microstructures constitutives du second ensemble de motifs, cette modulation peut être réalisée selon une technique de tramage (ou « screening ») consistant à moduler une trame régulière ou irrégulière constituée desdites microstructures sur la base de l'image en demi-teintes à restituer, par exemple une image en niveau de gris du dessin à restituer. Le résultat est une image dont le point de trame, à savoir les microstructures, sont modulées en dimensions pour restituer les demi-teintes de l'image. Une fois cette trame modulée générée, celle-ci peut être entrelacée entre les lignes et courbes constitutives du premier ensemble de motifs formant l'essentiel du dessin.

Les modes de réalisation selon l'invention peuvent avantageusement être générés selon les principes énoncés dans la demande internationale WO 03/103962 mentionnée en préambule et incorporée ici par référence dans son ensemble. Selon ces principes, les motifs (c'est-à-dire à la fois les lignes et courbes constitutives du premier ensemble de motifs et les microstructures constitutives du second ensemble de motifs) peuvent être générés sous la forme de motifs tridimensionnels, à savoir des motifs présentant non seulement une certaine largeur, mais également une certaine profondeur. Dans le contexte de la présente invention, par « modulation en dimensions » des motifs, il faut comprendre une modulation en largeur et/ou en profondeur desdits motifs.

Avantageusement, selon une variante de l'invention, on peut prévoir que les lignes et courbes constitutives du premier ensemble de motifs ne soient pas modulées en dimensions de la même manière que les microstructures constitutives du second ensemble de motifs. Par exemple, les lignes et courbes pourraient avoir une profondeur constante, alors que les microstructures sont modulées en profondeur, ou inversement. L'idée est ici d'introduire une différenciation entre les deux ensembles de motifs dans la manière avec laquelle les motifs de chaque ensemble sont modulés en dimensions.

Dans la même idée, il est envisageable d'attribuer à chaque motif un profil de gravure déterminé. Par exemple, les lignes et courbes constitutives du premier ensemble de motifs pourraient être générées de manière à présenter un profil de gravure sensiblement trapézoïdal, avec un fond, alors que les microstructures pourraient être générées de manière à présenter un profil de gravure en « V ». L'idée est à nouveau d'introduire une différenciation supplémentaire entre les deux ensembles de motifs, cette fois-ci en ce qui concerne le profil de gravure de chaque ensemble de motifs.

Toujours à titre de variante avantageuse, au moins deux microstructures répétitives distinctes (tel le « J » et le « V » dans le second mode de réalisation) peuvent être modulées en dimensions de manière différente, par exemple l'une avec une profondeur constante et l'autre avec une profondeur variable.

S'agissant des variantes susmentionnées, il est également envisageable de moduler uniquement en profondeur une partie des motifs générés, les variations de profondeur des motifs ainsi générés permettant également de restituer diverses demi-teintes.

La transposition dans une plaque d'impression taille-douce des motifs générés selon la présente invention peut être opérée selon les principes énoncés dans la demande internationale WO 03/103962. Dans ce contexte, la transposition peut être réalisée, préférablement par gravure laser, soit directement dans une plaque d'impression ou indirectement dans un précurseur de plaque d'impression, ce précurseur étant ensuite utilisé pour produire plusieurs plaques d'impression par galvanoplastie.

Comme proposé dans la demande internationale WO 03/103962, la transposition des motifs générés comprendra avantageusement la génération d'un ensemble de données digitales tridimensionnelles constituées de pixels représentatifs chacun d'un point élémentaire à graver dans la surface de la plaque d'impression ou du précurseur de plaque d'impression, la gravure en tant que telle étant opérée pixel par pixel sur la base de ces données digitales tridimensionnelles.

Cette technique est particulièrement adaptée pour réaliser des plaques d'impression avec les motifs générés selon l'invention dans la mesure où cette technique est essentiellement indépendante du degré de complexité du dessin à graver. L'entrelacement d'une myriade de microstructures entre les lignes et courbes constitutives du premier ensemble de motifs ne présentera donc aucun problème du point de vue de la gravure desdites microstructures. Par contre, la réplication d'une telle myriade de microstructure manuellement ou vectoriellement par des moyens traditionnels de gravure sera trop fastidieuse et complexe pour pouvoir être raisonnablement envisagée par un contrefacteur.

Il est entendu que la présente demande englobe également toute plaque gravée (notamment toute plaque d'impression ou tout précurseur de plaque d'impression selon ce qui a été décrit dans la demande WO 03/103962) de manière à présenter des motifs gravés reflétant les motifs générés selon la présente invention.

La présente demande englobe également un document de valeur, avantageusement un billet de banque, à l'image de ce qui illustré dans la figure 2 (ou tout autre document de sécurité, tels un passeport, une carte d'identité, un chèque, etc.), comprenant un motif imprimé reflétant les motifs générés selon la présente invention. Ce motif imprimé est avantageusement imprimé selon un procédé d'impression taille-douce au moyen de la plaque gravée susmentionnée. Le motif imprimé pourrait toutefois être imprimé selon tout autre procédé d'impression adéquat, par exemple un procédé d'impression offset. Dans ce dernier cas, toutefois, la modulation en dimensions des motifs ne peut porter que sur une modulation bidimensionnelle des motifs. L'impression taille-douce présente l'avantage que des motifs tridimensionnels peuvent être créés sur le document de valeur, la modulation en dimensions des motifs pouvant ainsi jouer sur la profondeur ou hauteur des motifs comme discuté plus haut.

On comprendra de manière générale que diverses modifications et/ou améliorations évidentes pour l'homme du métier peuvent être apportées aux modes de réalisation décrits dans la présente description sans sortir du cadre de l'invention défini par les revendications "annexées.

En particulier, bien que les dessins annexés montrent uniquement un portrait, l'invention s'applique de manière analogue à la restitution de tout autre motif pictural selon une technique de rendu taille-douce.

En outre, bien que les figures 5 à 8 montrent des microstructures répétitives formées de micro-lettres, il est bien entendu que toute autre microstructure restituant une information reconnaissable par un observateur peut être utilisée, par exemple des chiffres et/ou des symboles géométriques déterminés. Dans le cadre de la présente invention la notion « micro-lettres » englobe tout symbole alphanumérique.

Par ailleurs, il est parfaitement envisageable, dans le cadre de la présente invention, que les microstructures du second ensemble comprennent à la fois des microstructures stochastiques et des microstructures répétitives (par ex. micro-lettres, chiffres et/ou symboles géométriques).

## Revendications

1. Procédé de génération de motifs représentant une image en demi-teintes, ledit procédé comprenant la génération d'un premier ensemble de motifs (10) constitués de lignes et de courbes modulées en dimensions pour produire des variations de tons restituant les demi-teintes de l'image selon une technique de rendu taille-douce,
**caractérisé en ce que** ledit procédé comprend la génération d'un second ensemble de motifs (20 ; 30) constitués de microstructures distinctes des lignes et des courbes dudit premier ensemble de motifs, lesdites microstructures étant modulées en dimensions pour produire des variations de tons restituant les demi-teintes de l'image, lesdites microstructures étant constituées de microstructures stochastiques (20) assimilables à un grain et/ou de microstructures répétitives (30) restituant une information reconnaissable par un observateur, lesquelles microstructures répétitives comprennent des micro-lettres et/ou des micro-symboles,
ledit second ensemble de motifs (20 ; 30) étant entrelacé avec ledit premier ensemble de motifs (10) de telle sorte que lesdites microstructures du second ensemble de motifs occupent les espaces entre les lignes et courbes du premier ensemble de motifs et de manière à ce que les demi-teintes restituées par le second ensemble de motifs complètent les demi-teintes restituées par le premier ensemble de motifs.

2. Procédé selon la revendication 1, **caractérisé en ce que** lesdites microstructures stochastiques ont des dimensions inférieures à 10 microns.

3. Procédé selon la revendication 1, **caractérisé en ce que** lesdites microstructures répétitives comprennent au moins des première et seconde microstructures répétitives distinctes, et **en ce qu'**au moins la première microstructure répétitive n'est pas modulée en dimensions de la même manière que la seconde microstructure répétitive.

4. Procédé selon la revendication 1 ou 3, **caractérisé en ce que** la largeur de ligne desdites microstructures répétitives n'excède pas quelques dizaines de microns.

5. Procédé selon l'une quelconque des revendications précédentes, **caractérisé en ce que** la modulation en dimensions desdites microstructures est réalisée selon une technique de tramage consistant à moduler une trame régulière ou irrégulière constituée desdites microstructures sur la base de ladite image en demi-teintes.

6. Procédé selon l'une quelconque des revendications précédentes, **caractérisé en ce que**, pour une zone donnée de l'image, le ton restitué par les lignes et courbes dudit premier ensemble de motifs est plus foncé que le ton restitué par les microstructures dudit second ensemble de motifs.

7. Procédé selon l'une quelconque des revendications précédentes, **caractérisé en ce que** lesdits premier et second ensembles de motifs sont entrelacés de telle sorte que les deux ensembles ne présentent aucune partie contiguë et soient espacés l'un de l'autre.

8. Procédé selon l'une quelconque des revendications précédentes, **caractérisé en ce que** lesdits motifs générés sont des motifs tridimensionnels et **en ce que** la modulation en dimensions desdits motifs comprend la modulation en largeur et/ou en profondeur desdits motifs.

9. Procédé selon la revendication 8, **caractérisé en ce que** les lignes et courbes du premier ensemble de motifs ne sont pas modulées en dimensions de la même manière que les microstructures du second ensemble de motifs.

10. Procédé selon la revendication 8 ou 9, **caractérisé en ce que** la génération desdits motifs inclut l'attribution à chaque motif d'un profil de gravure déterminé.

11. Procédé selon la revendication 10, **caractérisé en ce que** le profil de gravure des lignes et courbes du premier ensemble de motifs est différentiable du profil de gravure des microstructures du second ensemble de motifs.

12. Procédé selon l'une quelconque des revendications précédentes, **caractérisé en ce que** ladite image en demi-teintes est un portrait.

13. Procédé de production d'une plaque d'impression taille-douce, **caractérisé en ce qu'**il comprend la transposition par gravure directe dans une plaque d'impression ou par gravure indirecte dans un précurseur de plaque d'impression des motifs générés selon le procédé de l'une quelconque des revendications 1 à 12.

14. Procédé selon la revendication 13, **caractérisé en ce que** la transposition desdits motifs par gravure directe ou indirecte comprend la génération d'un ensemble de données digitales tridimensionnelles constituées de pixels représentatifs chacun d'un point élémentaire à graver dans la surface de ladite plaque d'impression ou dudit précurseur de plaque d'impression et **en ce que** la gravure est opérée pixel par pixel sur la base desdites données digitales tridimensionnelles.

15. Procédé selon la revendication 13 ou 14, **caractérisé en ce que** la gravure est opérée par laser.

16. Plaque gravée comprenant des motifs gravés représentant une image en demi-teintes, **caractérisée en ce que** lesdits motifs gravés sont les motifs générés selon le procédé de l'une quelconque des revendications 1 à 12.

17. Document de valeur, notamment billet de banque, comprenant un motif imprimé (2), lequel motif imprimé (2) représente une image en demi-teintes et comporte un premier ensemble de motifs (10) constitués de lignes et de courbes modulées en dimensions pour produire des variations de tons restituant les demi-teintes de l'image selon une technique de rendu taille-douce,
**caractérisé en ce que** ledit motif imprimé (2) comporte en outre un second ensemble de motifs (20 ; 30) constituées de microstructures distinctes des lignes et des courbes dudit premier ensemble de motifs, lesdites microstructures étant modulées en dimensions pour produire des variations de tons restituant les demi-teintes de l'image,
**en ce que** le second ensemble de motifs (20 ; 30) est entrelacé avec ledit premier ensemble de motifs (10) de telle sorte que lesdites microstructures du second ensemble de motifs occupent les espaces entre les lignes et courbes du premier ensemble de motifs et de manière à ce que les demi-teintes restituées par le second ensemble de motifs complètent les demi-teintes restituées par le premier ensemble de motifs,
et **en ce que** lesdites microstructures sont constituées de microstructures stochastiques (20) assimilables à un grain et/ou de microstructures répétitives (30) restituant une information reconnaissable par un observateur, lesquelles microstructures répétitives comprennent des micro-lettres et/ou des micro-symboles.

18. Document de valeur selon la revendication 17, **caractérisé en ce que** ledit motif imprimé (2) est imprimé selon un procédé d'impression taille-douce au moyen d'une plaque gravée selon la revendication 16.

## Claims

1. Method of generating patterns representing a halftone image, said method comprising the generation of a first set of patterns (10) consisting of lines and curves dimensionally modulated to produce variations in tones reproducing the halftones of the image using an intaglio rendering technique,
**characterized in that** said method comprises the generation of a second set of patterns (20; 30) consisting of microstructures distinct from the lines and curves of the first set of patterns, said microstructures being dimensionally modulated to produce variations in tones reproducing the halftones of the image, said microstructures consisting of stochastic microstructures (20) that can be likened to a grain and/or repetitive microstructures (30) reproducing information that can be recognized by an observer, which repetitive microstructures comprise microletters and/or microsymbols,
said second set of patterns (20; 30) being interlaced with said first set of patterns (10) such that said microstructures of the second set of patterns occupy the spaces between the lines and curves of the first set of patterns and so that the halftones reproduced by the second set of patterns complement the halftones reproduced by the first set of patterns.

2. Method according to claim 1, **characterized in that** said stochastic microstructures have dimensions less than 10 microns.

3. Method according to claim 1, **characterized in that** said repetitive microstructures comprise at least first and second distinct repetitive microstructures, and **in that** at least the first repetitive microstructure is not dimensionally modulated in the same way as the second repetitive microstructure.

4. Method according to claim 1 or 3, **characterized in** the line width of said repetitive microstructures does not exceed a few tens of microns.

5. Method according to any one of the preceding claims, **characterized in that** said microstructures are dimensionally modulated according to a screening technique consisting in modulating a regular or irregular screen consisting of said microstructures on the basis of said halftone image.

6. Method according to any one of the preceding claims, **characterized in that**, for a given area of the image, the tone reproduced by the lines and curves of said first set of patterns is darker than the tone reproduced by the microstructures of said second set of patterns.

7. Method according to any one of the preceding claims, **characterized in that** said first and second sets of patterns are interlaced in such a way that the two sets do not present any contiguous part and are spaced apart from each other.

8. Method according to any one of the preceding claims, **characterized in that** said generated patterns are three-dimensional patterns and **in that** the dimensional modulation of said patterns comprises the width and/or depth modulation of said patterns.

9. Method according to claim 8, **characterized in that** the lines and curves of the first set of patterns are not dimensionally modulated in the same way as the microstructures of the second set of patterns.

10. Method according to claim 8 or 9, **characterized in that** the generation of said patterns includes the assignment to each pattern of a determined engraving profile.

11. Method according to claim 10, **characterized in that** the engraving profile of the lines and curves of the first set of patterns can be differentiated from the engraving profile of the microstructures of the second set of patterns.

12. Method according to any one of the preceding claims, **characterized in that** said halftone image is a portrait.

13. A method of producing an intaglio printing plate, **characterized in that** it comprises the transposition by direct engraving into a printing plate or by indirect engraving into a printing plate precursor of the patterns generated according to the method of any one of Claims 1 to 12.

14. Method according to claim 13, **characterized in that** the transposition of said patterns by direct or indirect engraving comprises the generation of a set of three-dimensional digital data consisting of pixels each representative of an elementary point to be engraved in the surface of said printing plate or of said printing plate precursor and **in that** the engraving is done pixel by pixel on the basis of said three-dimensional digital data.

15. Method according to claim 13 or 14, **characterized in that** the engraving is done by laser.

16. Engraved plate comprising engraved patterns representing a halftone image, **characterized in that** said engraved patterns are the patterns generated according to the method of any one of claims 1 to 12.

17. Value document, notably a banknote, comprising a printed pattern (2), which printed pattern (2) represents a halftone image and comprises a first set of patterns (10) consisting of lines and curves dimensionally modulated to produce variations in tones reproducing the halftones of the image according to an intaglio rendering technique,
**characterized in that** said printed pattern (2) also comprises a second set of patterns (20; 30) consisting of microstructures distinct from the lines and curves of said first set of patterns, said microstructures being dimensionally modulated to produce variations in tones reproducing the halftones of the image,
**in that** the second set of patterns (20; 30) is interlaced with said first set of patterns (10) in such a way that said microstructures of the second set of patterns occupy the spaces between the lines and curves of the first set of patterns and so that the halftones reproduced by the second set of patterns complement the halftones reproduced by the first set of patterns,
and **in that** said microstructures consist of stochastic microstructures (20) that can be likened to a grain and/or repetitive microstructures (30) reproducing information that can be recognized by an observer, which repetitive microstructures comprise microletters and/or microsymbols.

18. Value document according to claim 17, **characterized in that** said printed pattern (2) is printed according to an intaglio printing method by means of an engraved plate according to claim 16.

## Patentansprüche

1. Verfahren zur Erzeugung von ein Halbtonbild darstellenden Mustern, wobei das Verfahren die Erzeugung einer ersten Gruppe von Mustern (10) enthält, die aus dimensionsmodulierten Linien und Kurven bestehen, um Variationen von Farbtönen zu erzeugen, die die Halbtöne des Bilds gemäß einer Stichtiefdruck-Wiedergabetechnik wiedergeben,
**dadurch gekennzeichnet, dass** das Verfahren die Erzeugung einer zweiten Gruppe von Mustern (20; 30) enthält, die aus Mikrostrukturen bestehen, welche sich von den Linien und Kurven der ersten Gruppe von Mustern unterscheiden, wobei die Mikrostrukturen dimensionsmoduliert sind, um Farbtonvariationen zu erzeugen, die die Halbtöne des Bilds wiedergeben, wobei die Mikrostrukturen aus stochastischen Mikrostrukturen (20), die einem Korn gleichgesetzt werden können, und/oder aus repetitiven Mikrostrukturen (30) bestehen, die eine von einem Betrachter erkennbare Information wiedergeben, wobei die repetitiven Mikrostrukturen Mikrobuchstaben und/oder Mikrosymbole enthalten, wobei die zweite Gruppe von Mustern (20; 30) mit der ersten Gruppe von Mustern (10) derart verschachtelt ist, dass die Mikrostrukturen der zweiten Gruppe von Mustern die Räume zwischen den Linien und Kurven der ersten Gruppe von Mustern einnehmen, und dass die von der zweiten Gruppe von Mustern wiedergegebenen Halbtöne die von der ersten Gruppe von Mustern wiedergegebenen Halbtöne vervollständigen.

2. Verfahren nach Anspruch 1, **dadurch gekennzeichnet, dass** die stochastischen Mikrostrukturen Abmessungen von weniger als 10 Mikron haben.

3. Verfahren nach Anspruch 1, **dadurch gekennzeichnet, dass** die repetitiven Mikrostrukturen mindestens erste und zweite unterschiedliche repetitive Mikrostrukturen enthalten, und dass mindestens die erste repetitive Mikrostruktur nicht in der gleichen Weise dimensionsmoduliert ist wie die zweite repetitive Mikrostruktur.

4. Verfahren nach Anspruch 1 oder 3, **dadurch gekennzeichnet, dass** die Linienbreite der repetitiven Mikrostrukturen einige zehn Mikron nicht überschreitet.

5. Verfahren nach einem der vorhergehenden Ansprüche, **dadurch gekennzeichnet, dass** die Dimensionsmodulation der Mikrostrukturen gemäß einer Rasterungstechnik durchgeführt wird, die darin besteht, ein gleichmäßiges oder ungleichmäßiges Raster zu modulieren, das aus den Mikrostrukturen auf der Basis des Halbtonbilds besteht.

6. Verfahren nach einem der vorhergehenden Ansprüche, **dadurch gekennzeichnet, dass** für eine gegebene Zone des Bilds der von den Linien und Kurven der ersten Gruppe von Mustern wiedergegebene Farbton dunkler ist als der von den Mikrostrukturen der zweiten Gruppe von Mustern wiedergegebene Farbton.

7. Verfahren nach einem der vorhergehenden Ansprüche, **dadurch gekennzeichnet, dass** die ersten und zweiten Gruppen von Mustern so verschachtelt sind, dass die zwei Gruppen keinen aneinanderstoßenden Bereich aufweisen und voneinander beabstandet sind.

8. Verfahren nach einem der vorhergehenden Ansprüche, **dadurch gekennzeichnet, dass** die erzeugten Muster dreidimensionale Muster sind, und dass die Dimensionsmodulation der Muster die Breiten- und/oder Tiefenmodulation der Muster enthält.

9. Verfahren nach Anspruch 8, **dadurch gekennzeichnet, dass** die Linien und Kurven der ersten Gruppe von Mustern nicht in der gleichen Weise dimensionsmoduliert sind wie die Mikrostrukturen der zweiten Gruppe von Mustern.

10. Verfahren nach Anspruch 8 oder 9, **dadurch gekennzeichnet, dass** die Erzeugung der Muster die Zuweisung eines bestimmten Gravurprofils zu jedem Muster umfasst.

11. Verfahren nach Anspruch 10, **dadurch gekennzeichnet, dass** das Gravurprofil der Linien und Kurven der ersten Gruppe von Mustern vom Gravurprofil der Mikrostrukturen der zweiten Gruppe von Mustern unterscheidbar ist.

12. Verfahren nach einem der vorhergehenden Ansprüche, **dadurch gekennzeichnet, dass** das Halbtonbild ein Porträt ist.

13. Verfahren zur Erzeugung einer Stichtiefdruckplatte, **dadurch gekennzeichnet, dass** es die Umsetzung durch direkte Gravur in eine Druckplatte oder durch indirekte Gravur in einen Druckplattenvorläufer der gemäß dem Verfahren nach einem der Ansprüche 1 bis 12 erzeugten Muster enthält.

14. Verfahren nach Anspruch 13, **dadurch gekennzeichnet, dass** die Umsetzung der Muster durch direkte oder indirekte Gravur die Erzeugung einer Gruppe von dreidimensionalen digitalen Daten enthält, die aus Pixeln bestehen, welche je für einen in die Fläche der Druckplatte oder des Druckplattenvorläufers zu gravierenden Elementarpunkt repräsentativ sind, und dass die Gravur Pixel für Pixel auf der Basis der dreidimensionalen digitalen Daten durchgeführt wird.

15. Verfahren nach Anspruch 13 oder 14, **dadurch gekennzeichnet, dass** die Gravur mittels Laser erfolgt.

16. Gravierte Platte, die ein Halbtonbild darstellende gravierte Muster enthält, **dadurch gekennzeichnet, dass** die gravierten Muster die gemäß dem Verfahren nach einem der Ansprüche 1 bis 12 hergestellten Muster sind.

17. Wertdokument, insbesondere Banknote, das ein gedrucktes Muster (2) enthält, wobei das gedruckte Muster (2) ein Halbtonbild darstellt und eine erste Gruppe von Mustern (10) enthält, die aus dimensionsmodulierten Linien und Kurven bestehen, um Variationen von Farbtönen zu erzeugen, die die Halbtöne des Bilds gemäß einer Stichtiefdruck-Wiedergabetechnik wiedergeben,
**dadurch gekennzeichnet, dass** das gedruckte Muster (2) außerdem eine zweite Gruppe von Mustern (20; 30) aufweist, die aus Mikrostrukturen bestehen, die sich von den Linien und Kurven der ersten Gruppe von Mustern unterscheiden, wobei die Mikrostrukturen dimensionsmoduliert sind, um Farbtonvariationen zu erzeugen, die die Halbtöne des Bilds wiedergeben,
dass die zweite Gruppe von Mustern (20; 30) mit der ersten Gruppe von Mustern (10) derart verschachtelt ist, dass die Mikrostrukturen der zweiten Gruppe von Mustern die Räume zwischen den Linien und Kurven der ersten Gruppe von Mustern einnehmen, und dass die von der zweiten Gruppe von Mustern wiedergegebenen Halbtöne die von der ersten Gruppe von Mustern wiedergegebenen Halbtöne vervollständigen,
und dass die Mikrostrukturen aus stochastischen Mikrostrukturen (20), die einem Korn gleichgesetzt werden können, und/oder aus repetitiven Mikrostrukturen (30) bestehen, die eine von einem Betrachter erkennbare Information wiedergeben, wobei die repetitiven Mikrostrukturen Mikrobuchstaben und/oder Mikrosymbole enthalten.

18. Wertdokument nach Anspruch 17, **dadurch gekennzeichnet, dass** das gedruckte Muster (2) gemäß einem Stichtiefdruckverfahren mittels einer gravierten Platte nach Anspruch 16 gedruckt wird.
